# EUROPEAN PATENT APPLICATION

(11) **EP 3 620 893 A1**
(43) Date of publication of application: **11.03.2020**
(21) Application number: 18192503.3
(22) Date of filing: 04.09.2018
(51) Int. Cl.: G06F 3/01

(54) **HAPTIC FEEDBACK TRANSDUCER UNIT FOR A HAPTIC FEEDBACK INTERFACE, HAPTIC FEEDBACK INTERFACE AND METHOD FOR DRIVING THE SAME**

(71) Applicant: Robert Bosch GmbH, 70442 Stuttgart (DE)
(72) Inventor: Jeon, Jin Han, 558962 Singapore (SG); So, Yong Heng, 564596 Singapore (SG); Fook, Tony, 751589 Singapore (SG)

(57) **Abstract**

A haptic feedback transducer unit for a haptic feedback interface is provided, including a sensor configured to emit an electrical signal upon mechanical stimulation and one or more actuators configured to provide a mechanical response in response to an electrical stimulation; wherein the sensor is configured to be independently electrically addressed from the one or more actuators; wherein the one or more actuators are disposed side-by-side on a substrate; wherein a sensor electroactive layer between a sensor bottom electrode and a sensor top electrode form a sensor surface. Further, a haptic feedback interface is provided, including a plurality of haptic interface points, wherein each haptic interface point comprises a haptic feedback transducer unit; and wherein the substrate is common to each haptic interface point. Further, a method for driving a haptic feedback is provided, the method including: upon receiving a touch event signal from a sensor, of one of the haptic interface points, by the touch controller, providing an actuation on said one of the haptic interface points.

## Description

### TECHNICAL FIELD

The present disclosure relates to a haptic feedback transducer unit for a haptic feedback interface. The present invention further relates to a haptic feedback interface and to a method for driving the same.

### BACKGROUND

There is an increasing trend of haptic applications for touch display interfaces such as consumer electronics. Haptic feedback recreates a tactile sensation in a user interface device by delivering either mechanical forces, pressures or vibrations to convey information to a user. In particular, a haptic actuator is the main component of a haptic system that provides mechanical actuation to deliver haptic perception for enhanced user experiences.

Todays' smart phones, touch pads and touchscreen display are mostly featured with vibrational haptic feedback driven by inertia-type actuators such as Eccentric Rotating Mass (ERM) and Linear Resonant Actuators (LRAs). These actuators provide only whole device vibration and have several limitations particularly of bulky size, lack of realistic feedback and complex mechanical design.

Therefore, there is a need for improved haptic actuators.

### SUMMARY

It is therefore, object of the invention to provide an improved haptic feedback transducer unit for a haptic feedback interface.

Various embodiments may provide a haptic feedback transducer unit for a haptic feedback interface. The haptic feedback transducer unit may include a sensor which may be configured to emit an electrical signal upon mechanical stimulation. The haptic feedback transducer unit may include one or more actuators which may be configured to provide a mechanical response in response to an electrical stimulation. The sensor may be configured to be independently electrically addressed from the one or more actuators. The sensor and the one or more actuators may be disposed side-by-side on a substrate. The sensor may include a sensor electroactive layer between a sensor bottom electrode and a sensor top electrode forming a sensor surface. Each of the one or more actuators may include an actuator electroactive layer between an actuator bottom electrode and an actuator top electrode forming an actuator surface.

Various embodiments may provide a haptic feedback interface. The haptic feedback interface may include a plurality of haptic interface points. Each haptic interface point may include a haptic feedback transducer unit. The substrate may be common to each haptic interface point.

Various embodiments may provide a method for driving a haptic feedback interface, the method may include: upon receiving a touch event signal from a sensor, of one of the haptic interface points, by the touch controller, providing an actuation on said one of the haptic interface points.

### BRIEF DESCRIPTION OF THE DRAWINGS

In the following description, various embodiments of the present disclosure are described with reference to the following drawings, in which:
FIG. 1 shows a schematic illustration of a haptic feedback transducer unit 100 according to various embodiments, including a sensor 110, a first actuator 130 and a second actuator 150 disposed on opposite sides of the sensor 110;
FIG. 2 shows a schematic illustration of a haptic feedback transducer unit 200 according to various embodiments, wherein the actuator electroactive layer 236 (256) is disposed over an edge 235 (255) of the actuator electrode 234 (254), and over an edge 214.1 (214.2) of the sensor bottom electrode 214;
FIG. 3 shows a schematic illustration of a haptic feedback transducer unit 300 according to various embodiments, wherein the sensor electroactive layer 316 is disposed over the edge 314.1 (314.2) of the sensor bottom electrode 314, and over the edge 335 (355) of the actuator electrode 334 (354);
FIG. 4 shows a schematic illustration of a haptic feedback transducer unit 400 according to various embodiments, wherein the sensor bottom electrode 414 and the actuator bottom electrode 434 (454) share a common and continuous electrode layer 404;
FIG. 5 shows a schematic illustration of a haptic feedback transducer unit 500 according to various embodiments, wherein the sensor top electrode 518 and the actuator top electrode 538 (558) share a common and continuous electrode layer 508;
FIG. 6 shows a schematic illustration of a haptic feedback transducer unit 600 according to various embodiments, wherein the sensor electroactive layer 616 is disposed over the actuator electroactive layer 636 (656). The haptic feedback transducer unit 600 includes the actuator electroactive layer 636 and 656 which are part of a common bottom electroactive layer 606, and further includes a sensor electroactive layer 616 which is part of the top electroactive layer 609;
FIG. 7 shows a schematic illustration of a haptic feedback transducer unit 700 according to various embodiments, identical to the haptic feedback transducer unit 200 of FIG. 2 with the exception that a material from the sensor electroactive layer 716 and a material from the actuator electroactive layer 736 (756) may be different from each other. In the haptic feedback transducer unit 700, the actuator electroactive layer 736 (756) is disposed over an edge 735 (755) of the actuator electrode 734 (754), and may be further disposed over an edge 714.1 (714.2) of the sensor bottom electrode 714;
FIG. 8 shows a schematic illustration of a haptic feedback transducer unit 800 according to various embodiments, identical to the haptic feedback transducer unit 300 of FIG. 3 with the exception that a material from the sensor electroactive layer 816 and a material from the actuator electroactive layer 836 (856) may be different from each other. In the haptic feedback transducer unit 800, the sensor electroactive layer 816 is disposed over the edge 814.1 (814.2) of the sensor bottom electrode 814, and over the edge 835 (855) of the actuator electrode 834 (854);
FIG. 9 shows a schematic illustration of a haptic feedback transducer unit 900 according to various embodiments, identical to the haptic feedback transducer unit 400 of FIG. 4 with the exception that a material from the sensor electroactive layer 916 and a material from the actuator electroactive layer 936 (956) may be different from each other. In the haptic feedback transducer unit 900, the sensor bottom electrode 914 and the actuator bottom electrode 934 (954) share a common and continuous layer 904;
FIG. 10 shows a schematic illustration of a haptic feedback transducer unit 1000 according to various embodiments, identical to the haptic feedback transducer unit 500 of FIG. 5 with the exception that a material from the sensor electroactive layer 1016 and a material from the actuator electroactive layer 1036 (1056) may be different from each other. In the haptic feedback transducer unit 1000, the sensor top electrode 1018 and the actuator top electrode 1038 (1058) share a common and continuous electrode layer 1008;
FIG. 11 shows a schematic illustration of a haptic feedback transducer unit 1100 according to various embodiments, identical to the haptic feedback transducer unit 600 of FIG. 6 with the with the exception that a material from the top electroactive layer 1109 and a material from the common bottom electroactive layer 1106 may be different from each other. For illustrative purposes, the common bottom electroactive layer 1106 may include an actuator electroactive material and the top electroactive layer 1109 may include a sensor electroactive material;
FIG. 12 shows a schematic illustration of a haptic feedback transducer unit 1200 according to various embodiments, comprising two common electroactive layers and three common electrode layers.
FIG. 13A shows a schematic top illustration of a haptic feedback transducer unit 1300 according to various embodiments;
FIG. 13B shows cross-sectional view A-A of the haptic feedback transducer unit 1300 of FIG. 13A;
FIG. 14 shows a flowchart of a method for driving a haptic feedback interface, according to various embodiments;
FIG. 15 shows a block diagram of a haptic feedback interface according to various embodiments;

### DETAILED DESCRIPTION

The following detailed description describes specific details and embodiments in which the invention may be practiced. These embodiments are described in sufficient detail to enable those skilled in the art to practice the invention. Other embodiments may be utilized and changes may be made without departing from the scope of the invention. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The invention illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by exemplary embodiments and optional features, modification and variation of the inventions embodied herein disclosed may be resorted to by those skilled in the art, and that such modifications and variations are considered to be within the scope of this invention.

The reference signs included in parenthesis in the claims are for ease of understanding of the invention and have no limiting effect on the scope of the claims.

Within the scope of the present disclosure and in accordance to various embodiments, the term "sensor" may refer to a layer stack including a sensor electroactive layer disposed between a sensor bottom electrode and a sensor top electrode. The sensor may be configured to emit an electrical signal upon receiving a mechanical stimulation. For example, when a user touches the sensor, the electroactive layer may convert the mechanical input into an electrical signal which signal may be detected at the electrodes.

Within the scope of the present disclosure and in accordance to various embodiments, the term "actuator" may refer to a layer stack including an actuator electroactive layer disposed between an actuator bottom electrode and an actuator top electrode. The actuator may be configured to provide a mechanical response in response to an electrical stimulus. For example, when an electrical stimulus is applied to the actuator via the actuator bottom electrode and the actuator top electrode, the actuator may provide a haptic feedback to a user in contact with the actuator.

Within the scope of the present disclosure and in accordance to various embodiments, the term "actuators" may refer to one or more actuators, for example to a first actuator, to a first actuator and a second actuator, or to a first actuator a second actuator and further actuators. The further actuators may be configured as the first actuator or the second actuator.

According to various embodiments, the sensor may be used to provide a further haptic feedback, by applying an electrical stimulus to the sensor, via the sensor bottom electrode and the sensor top electrode. Such further haptic feedback may be provided in addition to the haptic feedback from the one or more actuators, thus enhancing user experience.

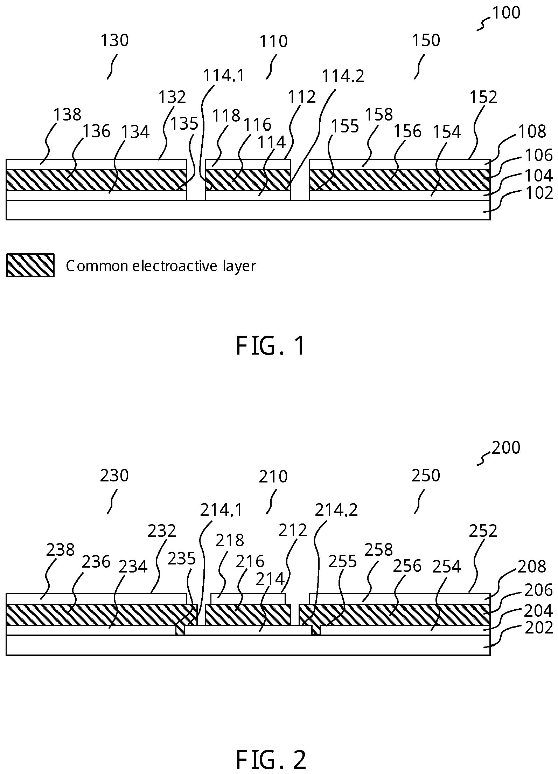

For the purpose of explaining the various embodiments, haptic feedback transducer units shown in FIGs. 1 - 13B show a first actuator and a second actuator for illustrative purposes. However, various embodiments are to be understood as including one or more actuators, wherein each may be configured as the first actuator or the second actuator. The one or more actuators, may include, a first actuator, or a first actuator and a second actuator, for example, 1, 2, 3, 4, 5, 6, or more actuators. Further details of the actuators may be described herein, for example, by describing the first actuator.

**FIG. 1** shows a schematic illustration of a haptic feedback transducer unit 100 according to various embodiments. The haptic feedback transducer unit 100 may include a substrate 102. The haptic feedback transducer unit 100 may further include a sensor bottom electrode 114, a sensor electroactive layer 116, and a sensor top electrode 118, forming a sensor 110. The sensor 110 may include a sensor surface 112. The haptic feedback transducer unit 100 may further include a first actuator bottom electrode 134, a first actuator electroactive layer 136, and a first actuator top electrode 138 forming a first actuator 130. The first actuator 130 may include a first actuator surface 132. The haptic feedback transducer unit 100 may further include a second actuator bottom electrode 154, a second actuator electroactive layer 156, and a second actuator top electrode 158 forming a second actuator 150. The second actuator 150 may include a second actuator surface 152. The first actuator 130, the sensor 110, and the second actuator 150 may be disposed side-by-side on the substrate 102, for example, arranged on a same surface of the substrate 102, as illustrated. The sensor 110 may be arranged between the first actuator 130 and the second actuator 150.

As illustrated in FIG. 1 and according to various embodiments, the sensor bottom electrode 114 and the first actuator bottom electrode 134 may share a common bottom electrode layer 104, which may be further commonly shared with the second actuator bottom electrode 154. The sensor bottom electrode 114, the first actuator bottom electrode 134, and the second actuator bottom electrode 154 may be disposed on the substrate 102. As illustrated in FIG. 1, the common bottom electrode layer 104 may be separated by a gap between the sensor bottom electrode 114 and the first actuator bottom electrode 134. For example, the common bottom electrode layer 104 may be also separated by a gap between the sensor bottom electrode 114 and the second actuator bottom electrode 154. Alternatively, the common bottom electrode layer 104 may be continuous between the sensor bottom electrode 114 and the first actuator bottom electrode 134. One advantage of providing a common bottom electrode layer is that it may be formed in one step.

As illustrated in FIG. 1 and according to various embodiments, the sensor electroactive layer 116 and the first actuator electroactive layer 136 may share a common electroactive layer 106, which may be further commonly shared with second actuator electroactive layer 156, as exemplary illustrated by the hatching pattern. The same hatching pattern is also used in FIGs. 2-5. As illustrated in FIG. 1, the common electroactive layer 106 may be separated by a gap between the sensor electroactive layer 116 and the first actuator electroactive layer 136. For example, common electroactive layer 106 may be also separated by a gap between the sensor electroactive layer 116 and the second actuator electroactive layer 156. Alternatively, the common electroactive layer 106 may be continuous between the sensor electroactive layer 116 and the first actuator electroactive layer 136. One advantage of providing a common electroactive layer is that it may be formed in one step.

As illustrated in FIG. 1 and according to various embodiments, the sensor top electrode 118 and the first actuator top electrode 138 may share a common top electrode layer 108, which may be further commonly shared with second actuator top electrode 158. The sensor top electrode 118, the first actuator top electrode 138, and the second actuator top electrode 158 may be disposed on the electroactive layers 116, 136, 156, respectively, which may be the common electroactive layer 106. As illustrated in FIG. 1, the common top electrode layer 108 may be separated by a gap between the sensor top electrode 118 and the first actuator top electrode 138. For example, the common top electrode layer 108 may be also separated by a gap between the sensor top electrode 118 and the second actuator top electrode 158. Alternatively, the common top electrode layer 108 may be continuous between the sensor top electrode 118 and the actuator top electrode 138(158). One advantage of providing a common layer is that it may be formed in one step.

The following explanations may apply to various embodiments or to some embodiments.

In accordance to various embodiments, the term "electroactive layer" may mean a layer which may undergo a shape change in response to an applied electrical field. The electroactive layer may include an electroactive material, e.g. an electroactive polymer. Within the context of the present disclosure and in accordance to various embodiments, an electroactive material, e.g., an electroactive polymer (EAP), is a material (a polymer in case of EAP) that undergoes shape change in response to an applied electrical field. An exemplary class of electroactive materials is the ferroelectroactive polymers (FerroEAP).

According to various embodiments, the sensor electroactive layer and the one or more actuator electroactive layer may be transparent.

According to various embodiments, the haptic feedback transducer units may include a sensor electroactive layer which layer properties are different from the one or more actuator electroactive layer, for example different from at least one of the first actuator electroactive layer and the second actuator electroactive layer. In such cases, the sensor electroactive layer may not share a common layer with one or more actuator electroactive layer. This allows for integrated touch sensing and haptic feedback features respectively, for example from piezoelectric and electrostrictive FerroEAP via patterning of the transparent electrodes and FerroEAP layers. The layer property may be selected from: different layer thickness, different materials, different material composition, or combinations thereof. One layer property may be the material composition.

The sensor electroactive layer may include a sensor electroactive material. A sensor electroactive material is an electroactive material suitable to be used in the sensor. An example of a sensor electroactive material is a piezoelectric material, for example, a piezoelectric ferro electroactive co-polymer.

According to various embodiments, the one or more actuator electroactive layers, for example the first actuator electroactive layer and/or the second actuator electroactive layer, may include an actuator electroactive material, for example an electrostrictive electroactive material. An example of an electrostrictive electroactive material is a ferroelectric relaxor polymer. The first actuator electroactive layer and the second actuator electroactive layer may share a common electroactive layer. In some embodiments, the actuator electroactive material may be a piezoelectric material, for example, a piezoelectric ferro electroactive co-polymer.

In the case wherein the sensor electroactive layer including a layer property different from a layer property of the one or more actuators, the sensor electroactive layer may not share a common layer with the one or more actuators.

This approach enables, for example, both piezoelectric touch sensing and electrostrictive vibration features realized in a single haptic feedback transducer unit without the needs of interlayer spacers and separate touch sensor which would lead to a -multi-array(pattern) design. For example, a piezoelectric FerroEAP-based touch sensor may be located at centre and electrostrictive FerroEAP actuators may be located surrounding the piezoelectric touch sensor. Also good optical properties may be obtained from this specific design due to the reduced number of layers used.

According to various embodiments, an example of a sensor electroactive material is a piezoelectric material, for example, a piezoelectric ferro electroactive co-polymer (piezoelectric FerroEAP), e.g. poly[(vinylidenefluoride-co-trifluoroethylene] (P(VDF-TrFE)), poly[(vinylidenefluoride-co-hexafluoropropylene] (P(VDF-HFP)), poly[(vinylidenefluoride-co-chlorotrifluoroethylene] (P(VDF-CTFE)). Co-polymeric piezoelectric FerroEAP, such as the previous examples, may also be referred to, herein, as FerroEAP co-polymer.

According to various embodiments, an example of an electrostrictive electroactive material is a ferroelectric relaxor polymer, such as a ferroelectric FerroEAP terpolymer. Examples of ferroelectric FerroEAP terpolymer are: poly (vinylidenefluoride - trifluoroethylene - chlorotrifluoroethylene) (abbreviated as P(VDF-TrFE-CTFE), poly(vinylidenefluoride-trifluoroethylene-chlorofluoroethylene) (abbreviated as P(VDF-TrFE-CFE), Poly(vinylidene fluoride-trifluoroethylene-hexafluoropropylene) (P(VDF-TrFE-HFP)).

According to various embodiments, for improving material properties, the electroactive materials, for example P(VDF-TrFE), may be high energy irradiated, for example with electron-beam radiation with a dose between 0.5 x 10⁵ Gy and 10⁶ Gy (1Gy=100 rads), for electron energy of 1.0MeV to 3.0MeV, in a temperature range between 20 Celsius to 120 Celsius at 1 atmosphere. Alternatively or in addition, for improving material properties, the electroactive materials, for example ferroelectric FerroEAP terpolymers, e.g. P(VDF-TrFE-CTFE) may be include plasticizers, e.g. bis(2-ethylhexyl) phthalate (DEHP).

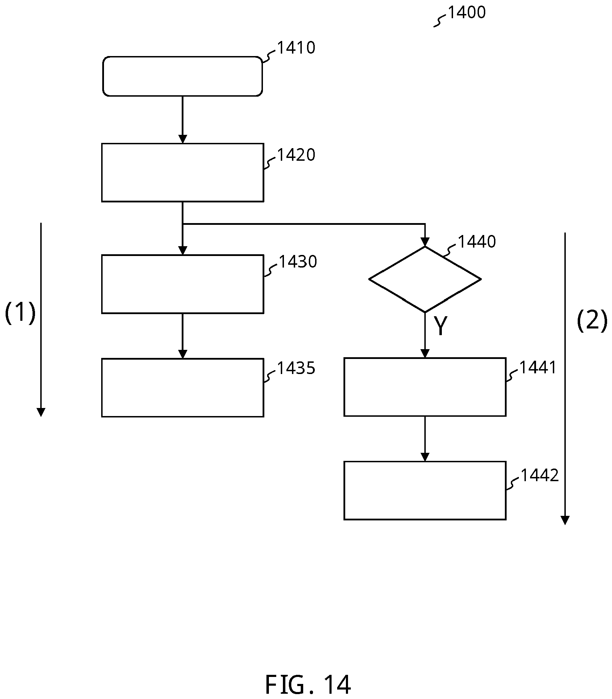

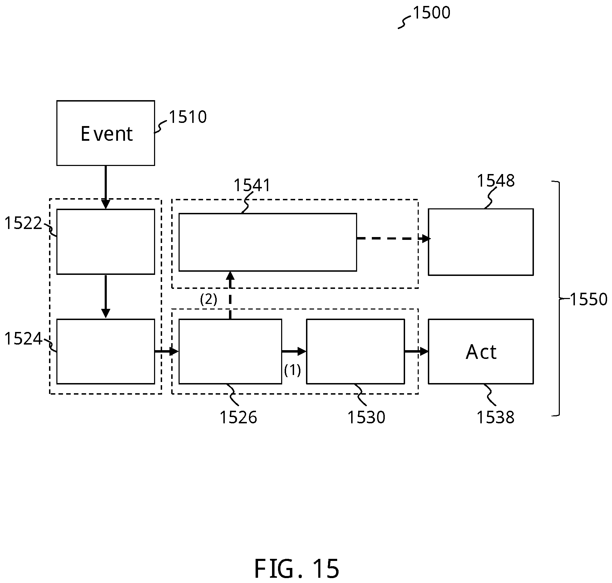

According to some embodiments, a layer thickness of an electroactive layer, may be optimized, for example a sensor electroactive layer for providing touch function or one or more of the actuator electroactive layer for providing actuation function. In such cases, the sensor electroactive layer may share a common layer, for example a continuous layer, with one or more actuator electroactive layer. According to some embodiments, a sensor electroactive layer, for example a piezoelectric FerroEAP copolymer layer may be operated as a touch sensor or actuator, for example via a switch as will explained further below in connection with FIG. 14 and 15.

According to various embodiments, the electrodes may include electrode materials, for example, selected from at least one of: silver nanowires (AgNWs), Copper nanowires (CuNWs), PEDOT:PSS, or combinations thereof. The electrodes, for example all electrodes, may be transparent. The term "electrodes" in plural may include the bottom electrode, the top electrode, the intermediate electrode, and common electrode layers.

According to various embodiments, an area of the sensor surface is smaller than an area of the actuator surface. For example, the area of the sensor surface may be smaller than at least one of: (i) an area of the surface of one of the actuators, (ii) the sum of the areas of each of the actuators.

According to various embodiments, known processing technologies may be used for depositing the layer. For example, screen printing and roll-to-roll process may be adopted fabricate the sensors and actuators.

According to various embodiments, the term "common" as used in conjunction with a "layer" may refer that the layer is shared amount the other elements to which it is common. The common layer may be interrupted, for example, including a gap between the sensor and at least one of the actuators. Alternatively, the layer may be continuous, for example between the sensor and at least one of the actuators. According to various embodiments, a skilled person in the art will understand that, even in a continuous layer, patterned features may be provided in certain portions, for example for providing exposed substrate areas for wiring. The wiring may be, for example, for enabling electrical coupling with other haptic feedback transducer unit elements or circuits.

According to some embodiments, wherein the electroactive layer is common, for example continuous between the sensor and the one or more actuators, the common electroactive layer may comprise a material which may be used for sensing and for actuating, for example a piezoelectric ferro electroactive co-polymer.

**FIG. 2** shows a schematic illustration of a haptic feedback transducer unit 200 according to various embodiments, wherein the actuator electroactive layer 236 (256) is disposed over an edge 235 (255) of the actuator electrode 234 (254), and for example, over an edge 214.1 (214.2) of the sensor bottom electrode 214. For example, as illustrated, the first actuator electroactive layer may be disposed over the edge 235 of the first actuator 230 and may further be disposed over an edge 214.1 of the sensor bottom electrode 214. Alternatively or in addition, in another example, the second actuator electroactive layer may be disposed over an edge 255 of the second actuator 250 and may further be disposed over an edge 214.2 of the sensor bottom electrode 214.

FIG. 2 shows that the first actuator 230 may include a first actuator surface 232. The second actuator 250 may include a second actuator surface 252.

Disposing the actuator electroactive layer over an edge of the actuator electrode, and for example, over an edge of the sensor bottom electrode, may be provided, for example, by providing the respective electroactive layer with a suitable geometry, for example extending over an end (edge) of the respective bottom electrode. For example a continuous common electroactive layer, as previously described, may be used to cover the edges and gaps between the bottom electrodes. Covering the edges of the electrodes provides the advantages that, when the top electrodes are deposited, the bottom electrodes are isolated (and thus insulated) and therefore not in direct contact with the top electrodes, thus avoiding defects due to short circuits.

A further measure for avoiding defects due to short circuits is to provide the top electrodes with a suitable dimension in relation to the underlying electroactive layers. For example, as illustrated in FIG. 2, the first actuator top electrode 238 may not extend to fully cover the underlying first actuator electroactive layer 236, thus the excess of the first actuator electroactive layer 236 provides the desired isolation. In another example, alternatively or in addition, the second actuator top electrode 258 may not extend to fully cover the underlying second actuator electroactive layer 256. For example a continuous common electroactive layer, as previously described, may also provide for the desired isolation between bottom electrode and top electrode.

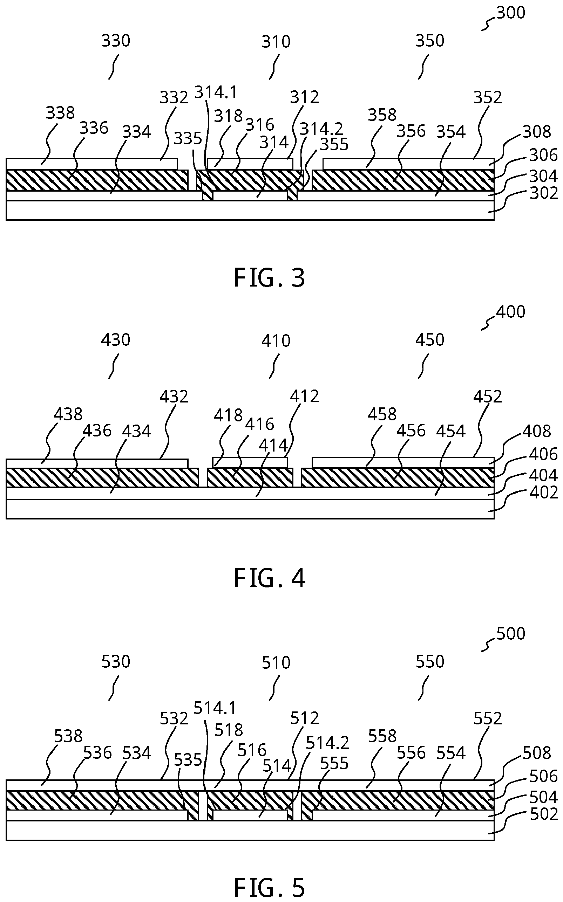

**FIG.** 3 shows a schematic illustration of a haptic feedback transducer unit 300 according to various embodiments, wherein the sensor electroactive layer 316 is disposed over the edge 314.1 (314.2) of the sensor bottom electrode 314, and over the edge 335 (355) of the actuator electrode 334 (354). Thereby, the edges 314.1, 314.2, 335, 355 are covered by the respective electroactive layer 316 which may be part of a common electroactive layer 306. Advantages are that possible defects due to short circuits created by direct contact between bottom and top electrodes may be avoided. For example a continuous common electroactive layer, as previously described, may also provide for the desired isolation between bottom electrode and top electrodes.

FIG. 3 shows that the first actuator 330 may include a first actuator surface 332. The second actuator 350 may include a second actuator surface 352.

**FIG. 4** shows a schematic illustration of a haptic feedback transducer unit 400 according to various embodiments, wherein the sensor bottom electrode 414 and the actuator bottom electrode 434 (454) share a common and continuous layer, namely, a common and continuous bottom electrode layer 404. As shown, the sensor 410 may include a sensor bottom electrode 414, wherein the sensor bottom electrode 414 is part of the continuous bottom electrode layer 404, which may be disposed on the substrate 402. The sensor 410 may further include a sensor electroactive layer 416 between sensor bottom electrode 414 and the sensor top electrode 418. As further shown, a first actuator 430 may include a first actuator bottom electrode 434, wherein the first actuator bottom electrode 434 may be part of the continuous bottom electrode layer 404. The first actuator 430 may further include a first actuator electroactive layer 436 between the first actuator bottom electrode 434 and the first actuator top electrode 438. As further shown, a second actuator 450 may include a second actuator bottom electrode 454, wherein the second actuator bottom electrode 454 may be part of the continuous bottom electrode layer 404. The second actuator 450 may further include a second actuator electroactive layer 456 between the second actuator bottom electrode 454 and the second actuator top electrode 458.

FIG. 4 shows that the first actuator 430 may include a first actuator surface 432. The second actuator 450 may include a second actuator surface 452.

According to various embodiments, and as illustrated in FIG. 4, the sensor electroactive layer 416, the first actuator electroactive layer 436, and the second actuator electroactive layer 456 are shown as separated layers. Any two or three of the sensor electroactive layer 416, the first actuator electroactive layer 436, and the second actuator electroactive layer 456 may be part of a common electroactive layer 406. Alternative to the FIG. 4, the common electroactive layer 406 may be a continuous layer. In other words, without gaps as illustrated in FIG. 4.

**FIG. 5** shows a schematic illustration of a haptic feedback transducer unit 500 according to various embodiments, wherein the sensor top electrode 518 and the actuator top electrode 538 (558) share a common and continuous layer 508. As illustrated in FIG. 5, in the haptic feedback transducer unit 500, the sensor electroactive layer 516 is disposed over the edge 514.1 (514.2) of the sensor bottom electrode 514, and the actuator electroactive layer 536(556) is disposed over the edge 535 (555) of the actuator electrode 534 (554). Thereby, the edges 514.1, 514.2, 535, 555 are covered by the respective electroactive layer.

As shown in FIG. 5, the sensor 510 may include a sensor electroactive layer 516 between a sensor bottom electrode layer 514 and a sensor top electrode layer 518, wherein the sensor top electrode layer 518 may be part of a continuous top electrode layer 508. As further shown, a first actuator 530 may include a first actuator electroactive layer 536 between a first actuator bottom electrode 534 and a first actuator top electrode 538. The first actuator top electrode 538 may be part of the continuous top electrode layer 508, as illustrated. As further shown, a second actuator 550 may include a second actuator electroactive layer 556 between a second actuator bottom electrode 554 and a second actuator top electrode 558. The second actuator top electrode 558 may be part of the continuous top electrode layer 508, as illustrated.

FIG. 5 shows that the first actuator 530 may include a first actuator surface 532. The second actuator 550 may include a second actuator surface 552.

According to various embodiments, and as illustrated in FIG. 5, the sensor electroactive layer 516, the first actuator electroactive layer 536, and the second actuator electroactive layer 556 are shown as separated layers. Any two or three of the sensor electroactive layer 516, the first actuator electroactive layer 536, and the second actuator electroactive layer 556 may be part of a common electroactive layer 506. Alternative to the FIG. 5, the common electroactive layer 506 may be a continuous layer. In other words, without gaps as shown in FIG. 5.

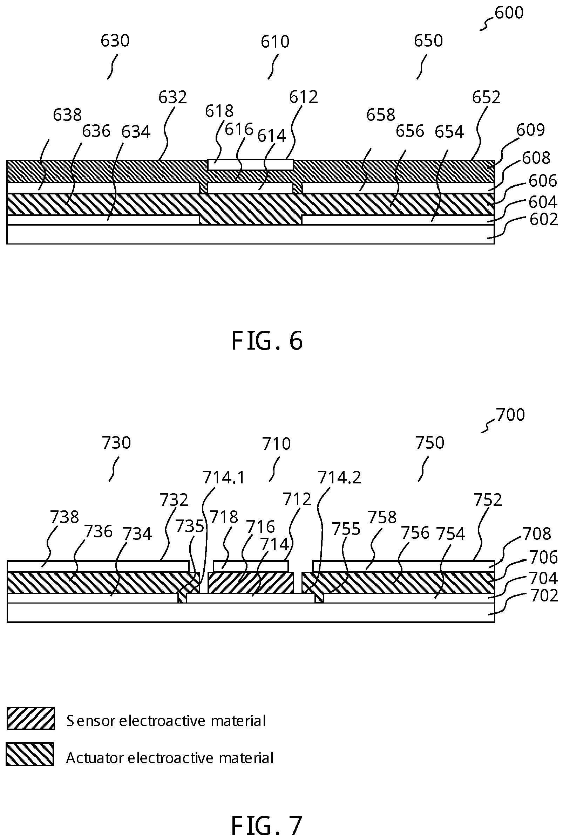

**FIG. 6** shows a schematic illustration of a haptic feedback transducer unit 600 according to various embodiments, wherein the sensor electroactive layer 616 is disposed over the actuator electroactive layer 636 (656). The haptic feedback transducer unit 600 includes the actuator electroactive layer 636 and 656 which are part of a common electroactive layer 606 also referred to as common bottom electroactive layer 606, and further includes a sensor electroactive layer 616 which is part of the top electroactive layer 609. Consequently, sensor electroactive layer 609 is disposed over common actuator electroactive layer 606. The common bottom electroactive layer 606 may be continuous between the actuator 630 and the actuator 650, the common bottom electroactive layer may also be continuous in a region overlapping the sensor 610. As illustrated in FIG. 6, a first actuator bottom electrode 634 and a second actuator bottom electrode 654 may be disposed on the substrate 602, having a separation in between. A common bottom electroactive layer 606 is disposed over the first actuator bottom electrode 634 and the second actuator bottom electrode 654 and in the separation, the common bottom electroactive layer 606 may be continuous, as shown. A first actuator top electrode 638 may be disposed on the common bottom electroactive layer 606 (on part 636), such that the overlap with the first actuator bottom electrode 634 forms a first actuator 630. A second actuator top electrode 658 may be disposed on the common bottom electroactive layer 606 (on part 636) such that the overlap with the second actuator bottom electrode 654 forms a second actuator 650.

FIG. 6 shows that the first actuator 630 may include a first actuator surface 632. The second actuator 650 may include a second actuator surface 652.

FIG. 6 further shows a sensor electroactive layer 616 formed between a sensor bottom electrode 614 and a sensor top electrode 618 comprising a sensor surface 612. In a case wherein the electroactive layers are formed as a continuous layer, it may be that the sensor bottom electrode 614, the first actuator top electrode 638, and optionally the second actuator top electrode 658, are part of a common electrode layer 608. For example, as illustrated in the example of FIG. 6, the sensor bottom electrode 614 is disposed over the common bottom electroactive layer 606, which is in turn, disposed over the bottom electrodes 634 and 654, which are thus part of a different layer than the layer forming the sensor bottom electrode 614.

As shown in FIG. 6, the sensor electroactive layer 616 may be a layer deposited over the sensor bottom electrode 614, which sensor electroactive layer 616 may further cover the edges of the sensor bottom electrode 614. The sensor electroactive layer 616 may be part of a continuous layer 609 which may cover first actuator top electrode 638 and may further cover the second actuator top electrode 658. The sensor electroactive layer 616 and the common bottom electroactive layer 606 may comprise different layer properties. The layer property may be selected from: different layer thickness, different materials, different material composition, or combinations thereof. For example, the common bottom electroactive layer 606 may include an actuator electroactive material, for example an electrostrictive electroactive material. An example of an electrostrictive electroactive material is a ferroelectric relaxor polymer. The top electroactive layer 609 may include a sensor electroactive material. An example of a sensor electroactive material is a piezoelectric material, for example, a piezoelectric ferro electroactive co-polymer. In one example, common bottom electroactive layer 606 and top electroactive layer 609 may include a piezoelectric ferro electroactive co-polymer.

According to various embodiments, and as illustrated in **FIGs. 7 to 13B****,** as will be described below, the haptic feedback transducer unit may include the one or more actuator electroactive layer which layer properties are different from the sensor electroactive layer, i.e. at least one of the first actuator electroactive layer and the second actuator electroactive layer is different from the sensor electroactive layer. The layer property may be selected from: different layer thickness, different materials, different material composition, or combinations thereof. One layer property may be the material composition. The sensor electroactive layer may include a sensor electroactive material. The one or more actuator electroactive layers, for example the first actuator electroactive layer and/or the second actuator electroactive layer, may include an actuator electroactive material. According to some embodiments, the first actuator electroactive layer and the second actuator electroactive layer may share a common bottom electroactive layer. In the case wherein the sensor electroactive layer including a layer property different from a layer property of the one or more actuators, the sensor electroactive layer may not share a common layer with the one or more actuators.

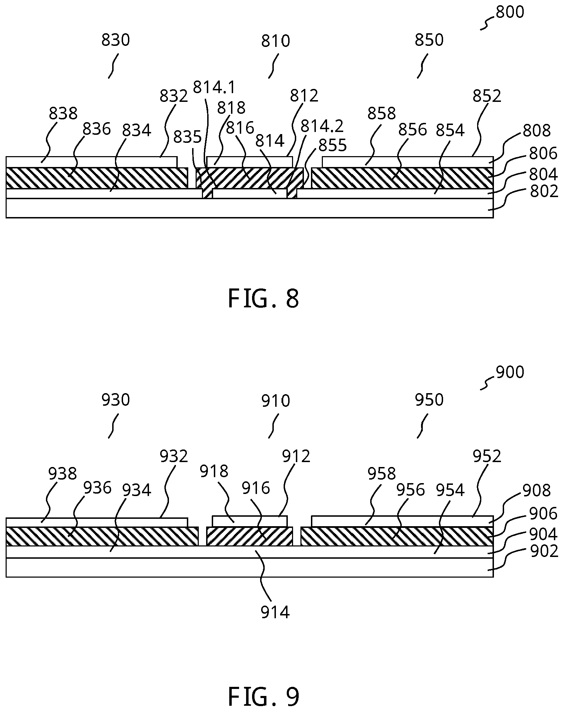

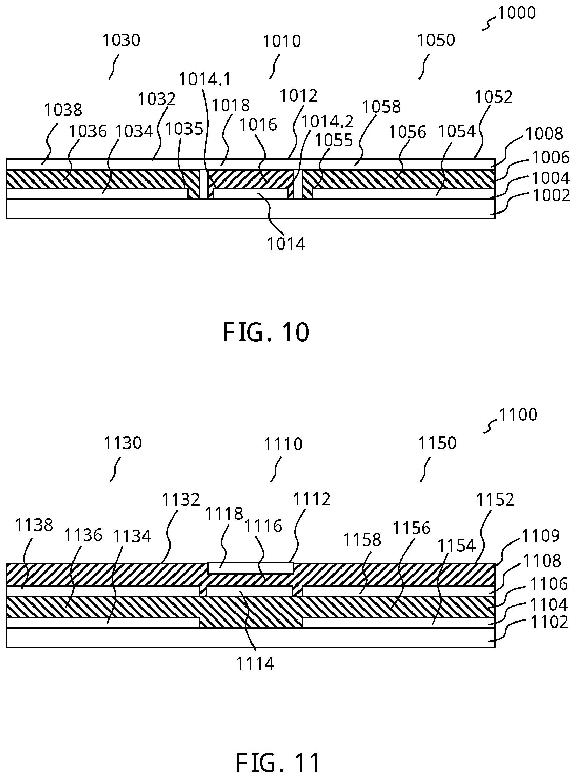

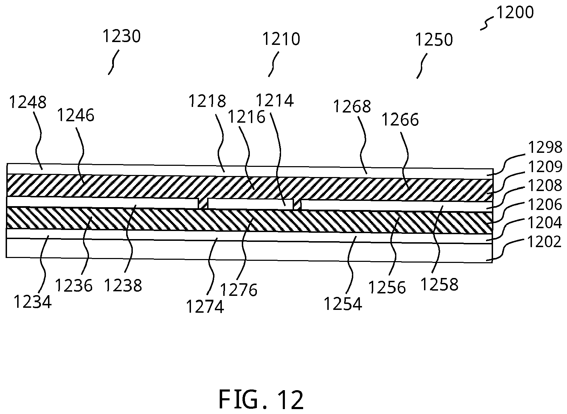

According to various embodiments, several design configurations of the haptic feedback transducer unit are shown in FIG. 7 to 13B. These haptic feedback transducer units may be implemented as single active layer structures meaning that they only include one layer of electroactive material. The design configurations shown, may include insulating area and with or without patterning for eliminating electrical short circuit and noise issues as well as simple preparation. Figure 7 and 8 exhibit the patterned sensor electroactive layers, for example FerroEAP layers, and transparent electrodes with over-coated layers of actuator electroactive layers, such as, e.g., ter-polymer or co-polymer, as insulating areas. Also, designs with common and continuous bottom or top electrode (Fig. 9 and FIG. 10) are described. Further, haptic feedback transducer unit with two layers, for example FerroEAP co-polymer and ter-polymer without patterning, are described in FIG. 11 and 12. These may be considered for simple preparation. As described before, all haptic feedback transducer unit with single electroactive material may also be employed as another possible configuration as shown in FIGs. 1 to 6, above.

**FIG. 7** shows a schematic illustration of a haptic feedback transducer unit 700 according to various embodiments, identical to the haptic feedback transducer unit 200 of FIG. 2 with the exception that a material from the sensor electroactive layer 716 and a material from the actuator electroactive layer 736 (756) may be different from each other. For example, as illustrated, the first actuator electroactive layer 736 may be disposed over the edge 735 of the first actuator electrode 734 and may further be disposed over an edge 714.1 of the sensor bottom electrode 714. Alternatively or in addition, in another example, the second actuator electroactive layer 756 may be disposed over an edge 755 of the second actuator electrode 754 and may further be disposed over an edge 714.2 of the sensor bottom electrode 714. The sensor electroactive layer 716 may include a sensor electroactive material. An example of a sensor electroactive material. At least one of the first actuator electroactive layer 736 and the second actuator electroactive layer 756 may include an actuator electroactive material. The first actuator electroactive layer 736 and the second actuator electroactive layer 756 may share a common layer 706. In the haptic feedback transducer unit 700 as illustrated in FIG. 7, the sensor electroactive layer 716 is of different layer property (e.g. different composition) than the first actuator electroactive layer 736 and the second actuator electroactive layer 756 (shown by different hatching) and therefore the sensor electroactive layer 716 may not share a common layer with the first actuator electroactive layer 736 and the second actuator electroactive layer 756. For illustrative purposes, a first hatching pattern is used for the sensor electroactive material and a second, different hatching pattern (different orientation), is used for the actuator electroactive material. The same hatching pattern is also used in FIGs. 8-13B.

**FIG. 8** shows a schematic illustration of a haptic feedback transducer unit 800 according to various embodiments, identical to the haptic feedback transducer unit 300 of FIG. 3 with the exception that a material from the sensor electroactive layer 816 and a material from the actuator electroactive layer 836 (856) may be different from each other. In the haptic feedback transducer unit 800, the sensor electroactive layer 816 is disposed over the edge 314.1 (814.2) of the sensor bottom electrode 814, and over the edge 835 (855) of the actuator electrode 834 (854). In the haptic feedback transducer unit 800 as illustrated in FIG. 8, the sensor electroactive layer 816 is of different layer property (e.g. different composition) than the first actuator electroactive layer 836 and the second actuator electroactive layer 856 (shown by different hatching) and therefore the sensor electroactive layer 816 may not share a common layer with the first actuator electroactive layer 836 and the second actuator electroactive layer 856.

**FIG. 9** shows a schematic illustration of a haptic feedback transducer unit 900 according to various embodiments, identical to the haptic feedback transducer unit 400 of FIG. 4 with the exception that a material from the sensor electroactive layer 916 and a material from the actuator electroactive layer 936 (956) may be different from each other. In the haptic feedback transducer unit 900, the sensor bottom electrode 914 and the actuator bottom electrode 934 (954) share a common and continuous layer 904. In the haptic feedback transducer unit 900 as illustrated in FIG. 9, the sensor electroactive layer 916 is of different layer property (e.g. different composition) than the first actuator electroactive layer 936 and the second actuator electroactive layer 956 (shown by different hatching) and therefore the sensor electroactive layer 916 may not share a common layer with the first actuator electroactive layer 936 and the second actuator electroactive layer 956.

**FIG. 10** shows a schematic illustration of a haptic feedback transducer unit 1000 according to various embodiments, identical to the haptic feedback transducer unit 500 of FIG. 5 with the exception that a material from the sensor electroactive layer 1016 and a material from the actuator electroactive layer 1036 (1056) may be different from each other. In the haptic feedback transducer unit 1000, the sensor top electrode 1018 and the actuator top electrode 1038 (1058) share a common and continuous layer 1008. In the haptic feedback transducer unit 1000 as illustrated in FIG. 10, the sensor electroactive layer 1016 is of different layer property (e.g. different composition) than the first actuator electroactive layer 1036 and the second actuator electroactive layer 1056 (shown by different hatching) and therefore the sensor electroactive layer 1016 may not share a common layer with the first actuator electroactive layer 1036 and the second actuator electroactive layer 1056.

**FIG. 11** shows a schematic illustration of a haptic feedback transducer unit 1100 according to various embodiments, identical to the haptic feedback transducer unit 600 of FIG. 6 with the exception that a material from the top electroactive layer 1104 and a material from the common bottom electroactive layer 1106 may be different from each other.. For example, the top electroactive layer 1109 may include a sensor electroactive material and the common bottom electroactive layer 1106 may include an actuator electroactive material, for example an electrostrictive electroactive material. An example of an electrostrictive electroactive material is a ferroelectric relaxor polymer. An example of a sensor electroactive material is a piezoelectric material, for example, a piezoelectric ferro electroactive co-polymer.

**FIG. 12** shows a schematic illustration of a haptic feedback transducer unit 1200 according to various embodiments. The haptic feedback transducer unit 1200 may include a first common bottom electrode layer 1204 which may be disposed on a substrate. The first common bottom electrode layer 1204 is exemplary shown as a continuous layer.

The haptic feedback transducer unit 1200 may further include a first common electroactive layer 1206 which may be disposed on the common bottom electrode layer 1204. The first common electroactive layer 1206 may include the first actuator electroactive layer and may further include the second actuator electroactive layer. The first common electroactive layer 1206 is exemplary shown as a continuous layer. The first common electroactive layer 1206 may include an actuator electroactive material, for example an electrostrictive electroactive material. An example of an electrostrictive electroactive material is a ferroelectric relaxor polymer, such as a ferroelectric FerroEAP terpolymer. Alternatively, the first common electroactive layer 1206 may include a piezoelectric material, for example, a piezoelectric ferro electroactive co-polymer.

The haptic feedback transducer unit 1200 may further include an intermediate common electrode 1208, which may include the sensor bottom electrode 1214, the first actuator top electrode 1238, and may further include the second actuator top electrode 1258. The intermediate common electrode 1208 may be separated by a respective gap from each of the first actuator top electrode 1238 the second actuator top electrode 1258. Thereby, the overlap of layers 1214, 1216, 1218 may form the sensor 1210.

The haptic feedback transducer unit 1200 may further include a second common electroactive layer 1209 which may be disposed on the intermediate common electrode 1208. The second common electroactive layer 1209 includes the sensor electroactive layer 1216. The second common electroactive layer 1209 is exemplary shown as a continuous layer. The second common electroactive layer 1209 may include a sensor electroactive material. An example of a sensor electroactive material is a piezoelectric material, for example, a piezoelectric ferro electroactive co-polymer.

For example following material combinations are possible: (i) the first common actuator electroactive layer 1206 may include a piezoelectric ferro electroactive co-polymer and the second common electroactive layer 1209 may include a piezoelectric ferro electroactive co-polymer for the sensor layer 1216 and the actuator layer 1246 (1266); (ii) the first common actuator electroactive layer 1206 may include a ferroectric FerroEAP terpolymer and the second common electroactive layer 1209 may include a piezoelectric ferro electroactive co-polymer for the sensor layer 1216 and the actuator layer 2146 (1266). For another example, in a reverse structure,

For another example, in a reverse structure, following material combinations are possible: (i) the first common electroactive layer 1206 may include a piezoelectric ferro electroactive co-polymer for the sensor layer 1276 and the actuator layer 1236 (1256) and the second common actuator electroactive layer 1209 may include a ferroectric FerroEAP terpolymer; (ii) the first common electroactive layer 1206 may include a piezoelectric ferro electroactive co-polymer for the sensor layer 1276 and the actuator layer 1236 (1256) and the second common actuator electroactive layer 1209 may include a piezoelectric ferro electroactive co-polymer.

The haptic feedback transducer unit 1200 may further include a second common top electrode 1298. The second common top electrode 1298 may include the first electroactive layer top electrode 1248 and may further include the second electroactive layer top electrode 1268. Thereby, the overlap of layers 1248, 1246, 1238 may form the first actuator 1230. Further, the overlap of layers 1268, 1266, 1258 may form the second actuator 1250.

Haptic feedback transducer units as illustrated in FIG. 6, FIG. 11 and FIG. 12 may be implemented as whole bi-layered structure design without requiring patterning of the electroactive layers. Bi-layered may mean that only two electroactive layers (common bottom electroactive layer and common top electroactive layer) may be required. A shared and patterned electrode approach, for example by providing the intermediate common electrode, enables both sensor touch function and actuators haptic feedback function realized in bi-layered structure design without requiring patterning of the electroactive polymers. In other words, the independent electrical addressing of the sensor from the actuators may be provided by the patterning of the intermediate common electrode, and therefore no patterning of the electroactive layers (common bottom electroactive layer and common top electroactive layer) may be necessarily required for that purpose.

The intermediate common electrode provides a minimum impact on the optical properties haptic feedback transducer unit. The sensor touch function may be realized by, for example a piezoelectric FerroEAP. The actuators haptic feedback function may be realized, for example, by electrostrictive FerroEAP or piezoelectric FerroEAP.

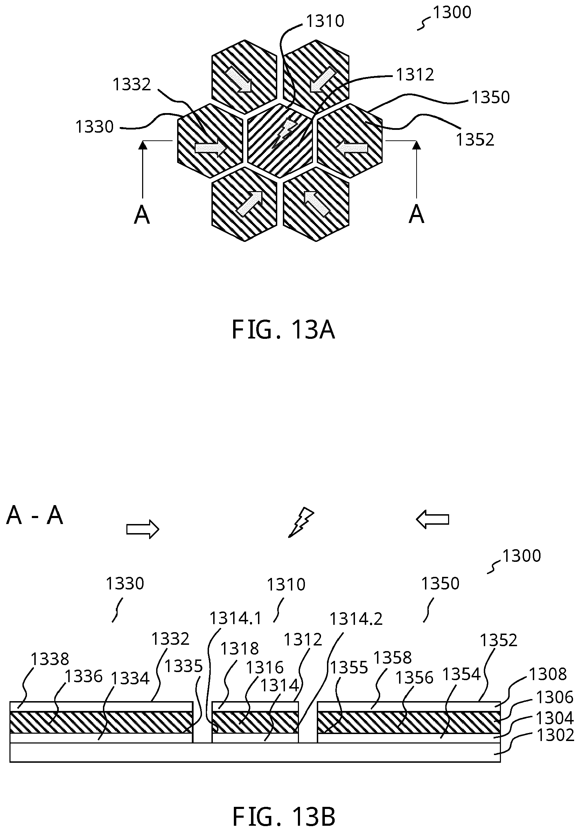

**FIG. 13A** shows a schematic top illustration of a haptic feedback transducer unit 1300 according to various embodiments. **FIG. 13B** shows cross-sectional view A-A of the haptic feedback transducer unit 1300 of FIG. 13A.

The haptic feedback transducer unit 1300 includes more than one actuators (1330, 1350) around a sensor 1310. FIG. 13A shows 6 actuators for illustration purposes, which, from the top view, hexagonally shaped and arranged in a honeycomb pattern.

FIG. 13B shows the cross-sectional view A-A of the haptic feedback transducer unit 1300, in an exemplary manner. The cross section layer structure may be any other suitable, as described herein in accordance to various embodiments, for example as shown in FIGs. 1-12.

FIG. 13A and 13B show a haptic feedback transducer unit which may be transparent, including patterned sensor electroactive layer including sensor electroactive material, for example FerroEAP copolymer, at the center touch sensing capability, and including actuator electroactive layer including an actuator electroactive material, for example a FerroEAP ter-polymer, surrounding elements for actuating capability. When the center element (sensor 1310) is switched on actuation mode, an amplification concept of actuation vibration magnitude up to 6 or 7 times may be realized due to the superposition of actuation amplitude from each actuating elements surrounding the center element (sensor 1310). In one alternative, the sensor and the actuators include a same material, for example a FerroEAP co-polymer, thus a possible configuration with all FerroEAP co-polymer layers can also be employed (for example as explained in connection with Figures 1 to 6). Furthermore, it will have the ease of processing as one benefit of using all FerroEAP co-polymer due to involvement of only single material.

According to some embodiments, when haptic feedback transducer unit is implemented with a layer structure as explained in connection with FIG 12, when the center element (sensor 1210) is switched on actuation mode, an amplification concept of actuation vibration magnitude up to 12 or 14 times may be realized due to the superposition of actuation amplitude from each actuating elements surrounding the center element (sensor 1210).

Various embodiments may describe a combination of touch position and force sensing with haptic feedback. For example, the piezoelectric sensing capability of FerroEAP copolymer film layer may be used without the needs of additional power supply and consumption, and haptic enabled transparent FerroEAP ter-polymer film layer (ferroelectric relaxor polymer). The embodiments according to various embodiments may be integrated into a single active layered transparent haptic feedback transducer unit by manipulating the patterned transparent electrode design and the EAP thin film fabrication process. At the same time, the approach disclose herein, in accordance to various embodiments, offer better optical properties (for example higher transmission, and lower reflection and haze value) since no additional touch sensing layer and air gap are required to detect touch and trigger the haptic feedback. Also, several design configurations are proposed for eliminating electrical short circuit and noise issues as well as a whole bi-layered design comprising different electroactive material layers with electrode sharing approach, resulting in minimizing the loss of optical properties and maximizing the touch sensing and haptic feedback capability.

In accordance to various embodiments, for example as illustrated in FIG. 13A and 13B, a synergistic haptic system integration is disclosed, wherein different haptic feedback operation modes are combined. For example FerroEAP co-polymer and ter-polymer actuator may be synergistically used for superposing their haptic feedback output.

**FIG. 14** shows a flowchart of a method for driving a haptic feedback interface, according to various embodiments. The method 1400 for driving a haptic feedback interface according to claim may include receiving a touch event signal 1410. The method 1400 may include, upon receiving the touch event signal (1410) from a sensor of the haptic feedback transducer unit of one of the haptic interface points, providing an actuation on said one of the haptic interface points, e.g. on the one or more actuators of the haptic feedback transducer unit of said one of the haptic interface points. The touch controller may decide if an actuation on said one of the haptic interface points is to be provided or not. Providing the actuation on said one of the haptic interface points may include amplifying the actuation signal to an amplified signal and applying 1435 the amplified signal to the one or more actuators of the haptic feedback transducer unit of said one of the haptic interface points. Alternatively or in addition, providing the actuation on said one of the haptic interface points may include generating 1441 an additional actuation signal and applying 1442 the additional actuation signal to the sensor of the haptic feedback transducer unit of said one of the haptic interface points.

According to various embodiments, after the touch event, the method 1400 may include a step 1420, which may include processing the touch event signal. Processing the touch event signal may include a decision function, for deciding if the process should continue under branch (1), thereby resulting in applying 1435 the amplified signal to the one or more actuators, and for deciding if the process should, alternatively or in addition to branch (1), continue under branch (2), thereby resulting in applying 1442 the additional actuation signal to the sensor of the haptic feedback transducer unit of said one of the haptic interface points.

According to various embodiments, providing an actuation on said one of the haptic interface points may include carrying out branch (1) every time a haptic feedback is instructed (e.g. by the touch controller) and may further include controlling a switch 1440 for deciding if branch (2) should be executed in addition to branch (1). The switch may be implemented as a software switch or as a hardware switch, for example as a semiconductor switch.

According to various embodiments, a haptic feedback interface may include a plurality of haptic interface points, wherein each haptic interface point comprises a haptic feedback transducer unit (100...1300) in accordance to various embodiments. The substrate may be a common layer shared among the plurality of haptic interface points. Further, the bottom electrode may be a common layer shared among the haptic feedback transducer units of the plurality of haptic interface points. Further, the top electrode may be a common layer shared among the haptic feedback transducer units of the plurality of haptic interface points. In some embodiments a common electroactive layer may be a common layer shared among the haptic feedback transducer units of the plurality of haptic interface points.

According to some embodiments, a sensor electroactive layer, for example a piezoelectric FerroEAP copolymer layer, may be operated as a touch sensor or actuator, for example via the switch 1440. When the actuation mode is switched on (114 flow chart proceeds on "Y"), it is possible to amplify of the overall vibration magnitude of the haptic feedback transducer unit based on superposition of harmonic response from both the branch (2), e.g. with a FerroEAP co-polymer, and the branch (1), e.g., with a ter-polymer layer.

**FIG. 15** shows a block diagram of a haptic feedback interface 1500 according to various embodiments. The haptic feedback interface 1500 may include a touch controller 1522, configured to receive a touch event signal. The haptic feedback interface 1500 may further include a main controller unit 1524, configured to receive a signal from the touch controller 1522. The haptic feedback interface 1500 may further include a haptic controller 1526, configured to set an actuation on at least one of the haptic interface points of a haptic feedback interface according to various embodiments.

As previously explained, and in accordance to various embodiments, the actuation on said one of the haptic interface points may be carried out according to at least one of a branch (1) or a branch (2). The decision about which of branch (1) and branch (2) are going to be active in the actuation may be carried out by the haptic controller 1526, which may be configured accordingly.

Under branch (1), the haptic feedback interface 1500 may include an amplifier 1530, the amplifier 1530 may be configured to receive a signal or command from the haptic controller 1526 and generate an amplified signal. The haptic feedback interface 1500 may be further configured to apply the amplified signal to the one or more actuators 1538 of the haptic feedback transducer unit of said one of the haptic interface points.

Under branch (2), the haptic feedback interface 1500 may include a generator 1541 for generating an additional actuation signal and applying 1548 the additional actuation signal to the sensor of the haptic feedback transducer unit of said one of the haptic interface points.

When branches (1) and (2) are selected for providing the actuation on said one of the haptic interface points, a combined actuation 1550 is generated.

In the following an example of a haptic feedback interface according to FIG. 5 is explained in more details.

The haptic feedback interface 1500 uses the synergistic haptic feedback approach as disclosed herein, by enabling superposition of actuation amplitude of the sensor and actuators. The sensor electrodes may be electrically coupled to the touch controller and the main microcontroller unit. When the user touches the haptic feedback interface 1500, the touch induced deformation on the sensor electroactive layer will lead to generation of small electrical charge signal which can be utilized for sensing. And with great precision, the amount of force induced by user touch can also be determined. The signal may be transferred to the touch controller and subsequently the main microcontroller unit. The microcontroller may be configured to process the sensing signal and to communicate with the haptic controller for sending an actuation signal. This may then trigger the amplifier to deliver a voltage signal to the actuators to generate haptic vibration feedback. Customized feedback, e.g., voltage, frequency, waveform, may be modulated by the haptic controller, which may be configured accordingly. Furthermore, the sensing signal may be used to trigger the switch in order to selectively activate the sensing or actuating mode of the sensor. This allows the realization of an amplified and perceivable haptic feedback. In other words, within a very short period of time, the applied electrical voltage signal from amplifier may enable both the sensor and the one or more actuators to vibrate simultaneously thereby providing a superposed haptic vibration feedback strength.

The haptic feedback interface 1500 may be integrated in a touch display device.

## Claims

1. A haptic feedback transducer unit (100...1300), for a haptic feedback interface, comprising
a sensor (110...1310) configured to emit an electrical signal upon mechanical stimulation, and one or more actuators (130...1330, 150...1350) configured to provide a mechanical response in response to an electrical stimulation, wherein the sensor (110...1310) is configured to be independently electrically addressed from the one or more actuators (130...1330, 150...1350);
wherein the sensor (110...1310) and the one or more actuators (130...1330, 150...1350) are disposed side-by-side on a substrate (102...1302); and wherein the sensor (110...1310) comprises a sensor electroactive layer (116...1316) between a sensor bottom electrode (114...1314) and a sensor top electrode (118...1318) forming a sensor surface (112...1312);
wherein each of the one or more actuators (130...1330, 150...1350) comprises an actuator electroactive layer (136...1336, 156...1356) between an actuator bottom electrode (134...1334, 154...1354) and an actuator top electrode (138...1338, 158...1358) forming an actuator surface (132...1332, 152...1352).

2. The haptic feedback transducer unit (100...1300) of claim 1, wherein
(i) the sensor bottom electrode (114...1314) and the actuator bottom electrode (134...1334,154...1354) share a common bottom electrode layer (104...1304), and/or wherein
(ii) the sensor top (118...1318) electrode and the actuator top electrode (138...1338, 158...1358) share a common top electrode layer (108...1308).

3. The haptic feedback transducer unit (700...1300) of claim 1 or claim 2, wherein the sensor electroactive layer (716...1316) and the actuator electroactive layer (736...1336, 756...1356) are different layers.

4. The haptic feedback transducer unit (100, 200, 300, 400, 500, 1200) of claim 1 or claim 2, wherein the sensor electroactive layer (116, 216, 316, 416, 516, 1216, 1276) and the actuator electroactive layer (136, 156, 236, 256, 336, 356, 436, 456, 536, 556, 1236, 1256, 1246, 1266) are provided by a common electroactive layer (106, 206, 306, 406, 506, 1206, 1209), and wherein the common electroactive layer (106, 206, 306, 406, 506, 1206, 1209) is optionally continuous.

5. The haptic feedback transducer unit (1200) of claim 4, wherein the common electroactive layer (1206, 1209) is continuous between the sensor (1210) and the actuator (1230, 1250).

6. The haptic feedback transducer unit (600, 1100, 1200) of any of claims 1 to 3, wherein the sensor electroactive layer (616, 1116, 1216) is disposed over the actuator electroactive layer (636, 656, 1136, 1156, 1236, 1256).

7. The haptic feedback transducer unit (600, 1100, 1200) of claim 6, wherein the sensor bottom electrode (614, 1114, 1214) is disposed over the common electroactive layer (606, 1106, 1206).

8. The haptic feedback transducer unit (1200) of any of claims 1 to 5, wherein the actuator electroactive layer is disposed over the sensor electroactive layer.

9. The haptic feedback transducer unit (1200) of claim 8, wherein the actuator bottom electrode is disposed over the common electroactive layer.

10. The haptic feedback transducer unit (100, 200, 300, 500...800, 1000...1300) of any of claims 1 to 9, wherein the actuator bottom electrode (134, 234, 334..., 154, 254, 354...) and the sensor bottom electrode (114...314, 514...814, 1014...1314) are separated by a gap between an edge (135...1315, 155...1355) of the actuator electrode and an edge (114.1...1314.1, 114.2...1314.2) of the sensor bottom electrode (114...314, 514...814, 1014...1314).

11. The haptic feedback transducer unit (200, 500, 600, 700, 1000, 1100) of claim 10, wherein
(i) the actuator electroactive layer (236, 256, 536, 556, 636, 656, 736, 756, 1036, 1056, 1136, 1156) is disposed over the edge (235, 255, 535, 555, 635, 655, 735, 755, 1035, 1055, 1135, 1155) of the actuator electrode (234, 254, 534, 554, 634, 654, 734, 754, 1034, 1054, 1134, 1154) and partially in the gap, or wherein
(ii) the actuator electroactive layer (236, 256, 736, 756) is disposed over the edge (235, 255, 735, 755) of the actuator electrode (234, 254, 734, 754), in the gap, and over the edge (214.1, 214.2, 714.1, 714.2) of the sensor bottom electrode (214, 714).

12. The haptic feedback transducer unit (300, 500, 600, 800, 1000, 1100, 1200) of claim 10, wherein
(i) the sensor electroactive layer (316, 516, 616, 816, 1016, 1116, 1216) is disposed over the edge (314.1, 314.2, 514.1, 514.2, 614.1, 614.2, 814.1, 814.2, 1014.1, 1014.2, 1114.1, 1114.2, 1214.1, 1214.2) of the sensor bottom electrode (314, 514, 614, 814, 1014, 1114, 1214) and partially in the gap, or wherein
(ii) the sensor electroactive layer (316, 816) is disposed over the edge (314.1, 314.2, 814.1, 814.2) of the sensor bottom electrode (314, 814), in the gap, and over the edge (335, 355, 835, 855) of the actuator electrode (334, 354, 834, 854).

13. The haptic feedback transducer unit (100...1300) of any of claims 1 to 12, wherein two or more actuators (130...1330, 150...1350) are arranged around the sensor (110...1310), preferably surrounding the sensor (1310).

14. The haptic feedback transducer unit (100...1300) of any of claims 1 to 13, wherein the sensor is further configured to provide a mechanical response in response to an electrical stimulation.

15. A haptic feedback interface, comprising a plurality of haptic interface points, wherein each haptic interface point comprises the haptic feedback transducer unit (100...1300) according to any of the previous claims wherein the substrate (102...1302) is common to each haptic interface point.

16. The haptic feedback interface of claim 15, further comprising a touch controller and a haptic controller.

17. A method (1400) for driving a haptic feedback interface according to claim 16, comprising: upon receiving a touch event signal (1410) from a sensor, of the haptic feedback transducer unit of one of the haptic interface points, by the touch controller, providing an actuation on said one of the haptic interface points.

18. The method (1400) of claim 17, wherein providing an actuation on said one of the haptic interface points comprises configuring (1430) an actuation signal with the haptic controller, amplifying the actuation signal to an amplified signal and applying (1435) the amplified signal to the one or more actuators of the haptic feedback transducer unit of said one of the haptic interface points.

19. The method (1400) of claim 17 or claim 18, wherein providing an actuation on said one of the haptic interface points comprises generating (1441) an additional actuation signal and applying (1442) the additional actuation signal to the sensor of the haptic feedback transducer unit of said one of the haptic interface points.
